# EUROPEAN PATENT SPECIFICATION

(11) **EP 3 826 268 B1**
(45) Date of publication and mention of the grant of the patent: **20.03.2024**
(21) Application number: 19841723.0
(22) Date of filing: 23.07.2019
(51) Int. Cl.: G06F 8/65, G06F 9/451, H04L 9/40, H04L 65/1073, H04L 67/08, H04L 67/1095

(54) **OFFLINE MANAGEMENT METHOD AND DEVICE FOR CLOUD DESKTOP, AND STORAGE MEDIUM**
OFFLINE-VERWALTUNGSVERFAHREN UND VORRICHTUNG FÜR CLOUD-DESKTOP SOWIE SPEICHERMEDIUM
DISPOSITIF ET PROCÉDÉ DE GESTION HORS LIGNE DESTINÉS À UN BUREAU EN NUAGE, ET SUPPORT D'INFORMATIONS

(30) Priority: 23.07.2018 CN 201810811374
(43) Date of publication of application: 26.05.2021
(73) Proprietor: ZTE Corporation, shenzhen Guangdong 518057 (CN)
(72) Inventor: MIAO, Guihai, Shenzhen, Guangdong 518057 (CN)
(74) Representative: Betten & Resch
(86) International application number: PCT/CN2019/097286
(87) International publication number: WO 2020/020154

(56) References cited:
- CN-A- 104 253 865
- CN-A- 106 506 620
- CN-A- 106 506 620
- CN-A- 107 864 217
- CN-A- 107 864 217
- CN-A- 107 885 564
- CN-A- 107 885 564
- CN-A- 108 306 969
- US-A1- 2011 265 083
- US-A1- 2017 154 018

## Description

### TECHNICAL FIELD

The present disclosure relates to the technical field of cloud desktops, in particular, to a method and device for offline management of a cloud desktop, and a storage medium.

### BACKGROUND

Traditional desktop management is implemented using localization management technology. With the advent of cloud computing and the strong demand from Information Technology (IT) departments, mobile office and IT consumerization have become inevitable trends, requiring people to look for solutions that can transform desktop management processes and reduce operating costs. Desktop virtualization or Virtual Desktop Infrastructure (VDI) has been applied and attracted widespread attention. Desktop virtualization is a server-based computing model, and borrows the traditional thin client model, allowing administrators and users to simultaneously obtain the advantages of the two methods: all desktop virtual machines are hosted in the data center and managed in a unified manner; and users can get complete Personal Computer (PC) use experience, that is, users can get the same user experience as traditional PCs through a thin client or similar device in local area network or remote access. Although centralized deployment is good, network packet loss and delay may lead to VDI response lag and poor user experience. Therefore, the heavy dependence on the network and the limited data center capacity may compromise the user experience if the conditions are not satisfied.

For example, CN 107885564A provides a super-fusion cloud desktop system including a cloud server side and a thin client side connected with the cloud server side. The super-fusion cloud desktop system is created by adopting a cloud desktop technology, a super-fusion technology, a unified management platform and standard X86 hardware based on the super-fusion concepts of computing, storage, network, server virtualization, desktop virtualization and other resources and technologies.

### SUMMARY

Embodiments of the present disclosure provide a method according to claim 1 and device for offline management of a cloud desktop according to claim 9, and a storage medium according to claim 10, to enable users to use their own cloud desktops in cases where they cannot access Internet or network delay is serious, thereby improving user experience.

An embodiment of the present disclosure provides a method for offline management of a cloud desktop, including: pulling a desired master image by initiating a request to an image management module of a cloud, and making an application to the cloud to generate a personal cloud desktop based on the master image in the cloud; and initiating a registration request through an application container engine to a registration service module of the cloud, to generate a personal container desktop in a local client based on the master image.

Another embodiment of the present disclosure provides a device for offline management of a cloud desktop, including: a memory, a processor, a program stored in the memory and executable by the processor, and a data bus for connection and communication between the processor and the memory, where the program, when executed by the processor, causes the processor to perform the above method.

Another embodiment of the present disclosure provides a storage medium configured as a computer-readable storage medium, where one or more programs are stored in the storage medium and executable by one or more processors to perform the above method.

### BRIEF DESCRIPTION OF DRAWINGS

Fig. 1 is a flowchart of a method for offline management of a cloud desktop provided in embodiment one of the present disclosure;
Fig. 2 is an interactive schematic diagram of a master image according to an embodiment of the present disclosure;
Fig. 3 is a flowchart showing S 120 in the method for offline management of a cloud desktop shown in Fig. 1;
Fig. 4 is an interactive schematic diagram showing daily management of a personal container desktop according to an embodiment of the present disclosure;
Fig. 5 showing an overall architecture of system security protection of a cloud desktop according to an embodiment of the present disclosure; and
Fig. 6 is a structural block diagram of a device for loud desktop offline management provided in embodiment two of the present disclosure.

### DETAILED DESCRIPTION

The embodiments described herein are merely intended to explain the present disclosure and are not intended to limit the present disclosure.

In subsequent descriptions, suffixes that used to represent an element, such as "module", "component" or "unit" are only for illustration of the present disclosure, which has no particular significance. Thus, "module", "component" and "unit" can be mixed in use.

### Embodiment one

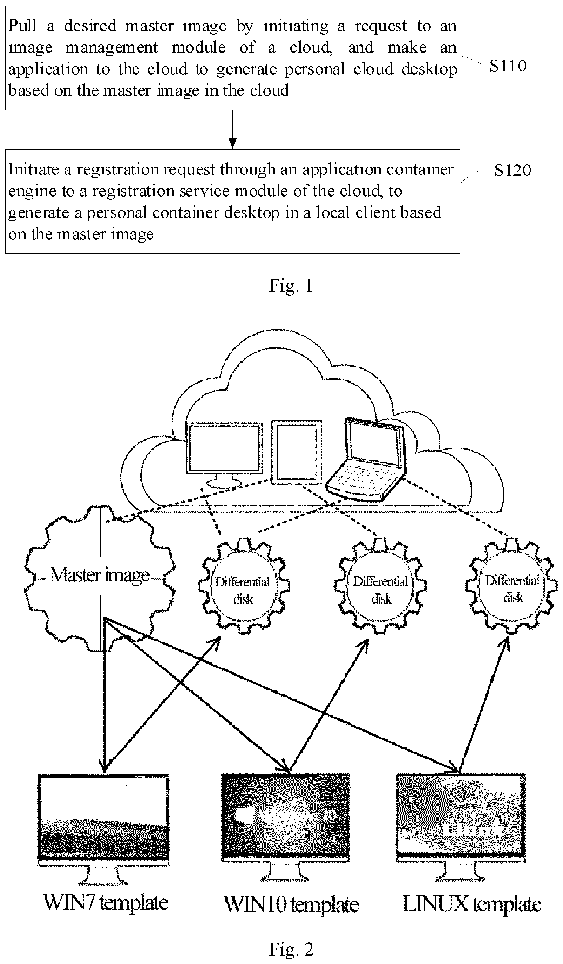

As shown in Fig. 1, this embodiment provides a method for offline management of a cloud desktop. The method includes the following steps S110 to S 120.

At S 110, a request is initiated to an image management module of the cloud to pull a desired master image, and an application is made to the cloud to generate a personal cloud desktop based on the master image in the cloud.

In an embodiment, the underlying virtualization architecture of the cloud desktop implemented according to the present disclosure supports open source virtualization technology (XEN, an X86 architecture based, fastest-growing, most stable, and least resource-consuming open source virtualization technology) and kernel-level virtualization technology (Kernel-based Virtual Machine, KVM, an open source system virtualization module). The application layer of the underlying virtualization architecture contains a traditional VDI proprietary desktop. After implementing VDI, a common, supporting desktop environment can be rapidly deployed over the network. Since a server can support many virtual desktops, by using Remote Desktop Services (RDS), a user accessing to a virtual desktop does not affect other virtual desktops or the host, the server has full access to all of the functions of such virtual machine (VM). A user can also access to his virtual desktop (i.e. a personal cloud desktop) using a remote desktop client, by initiating a request to the image management module of the cloud, for pulling a desired master image, and a request to the cloud, for generating a personal cloud desktop in the cloud based on the master image. Generally, a cloud service provider provides the user with multiple versions of system images as the master image of the personal cloud desktop, such that the user can apply for his personal cloud desktop to the corresponding cloud service provider according to actual requirements.

At S 120, a registration request is initiated through an application container engine to a registration service module of the cloud, to generate a personal container desktop based on the master image in a local client.

In an embodiment, the application container engine include an open source application container engine, such as DOCKER. DOCKER allows a developer to package his application(s) and dependent package(s) into a portable container which is then released to a machine running a LINUX operating system, or to a virtual machine. Such portable containers are each fully sandboxed and does not have any interfaces with each other. A lightweight, portable, self-contained container can be created for a variety of applications. DOCKER includes Image, Container, and Repository. A container is a running instance created from an image, which can be started, launched, stopped, and deleted. Containers are secure platforms isolated from each other. A container can be considered to be a simple version of a LINUX operating system environment (including root user permission, process space, user space, web space, and graphical pages) and application(s) running in the operating system environment. A container is encapsulated in form of a virtual machine, and a container desktop is then deployed on a client, such as a laptop. A container desktop supports a host operation system of WINDOWS/LINUX. In case of network disconnection, a user can still launch a container desktop on a terminal (such as a laptop, etc.) and login with an offline mode.

Therefore, a personal container desktop based on the master image in a local client is generated by initiating a registration request to the registration service module of the cloud by the application container engine. Security attributes can be enhanced by the registration service module, such that a container image cannot be copied, but can only be pulled in advance through a serving end under a condition that the network is connected. If copy is performed, an encryption key will be changed after copying, such that the container image cannot be started normally, thus ensuring the security of offline desktop products. When the network is connected, messages are regularly exchanged with the registration service module, including requesting registration from the registration service module, checking the legality of the container desktop, etc.

As shown in Fig. 2, an image of an offline desktop (i.e. a personal container desktop) and an image of a VDI desktop (i.e. a personal cloud desktop) are both derived from the master image, and the two correspond to each other, representing characteristics as follows: 1) multiple VMs share the same system master disk, are upgraded patched in a unified manner; 2) the write operation of each VM to the system disk is saved in a differential image, and a template is created in advance through the differential image; 3) the combination of the master disk and the differential disk is mapped to a linked clone disk as the entire system disk of the VM; 4) a Solid State Disk (SSD) is used as the master disk of the system to break through a bottleneck of Input/Output Per Second (IOPS); and 5) as long as the storage capacity of the SSD is sufficient, there is no limitation to the number of templates. At this time, users may choose to start different desktops at the local client according to the actual situations encountered, or start different desktops at the local client according to the network situation. The personal cloud desktop is started when the network is unobstructed, while the personal container desktop is started when the network is obstructed, such that users can use their own cloud desktops when they cannot access the Internet or a network delay is serious, thereby improving user experience. The image of the offline desktop and the image of the VDI desktop are both derived from the master image.

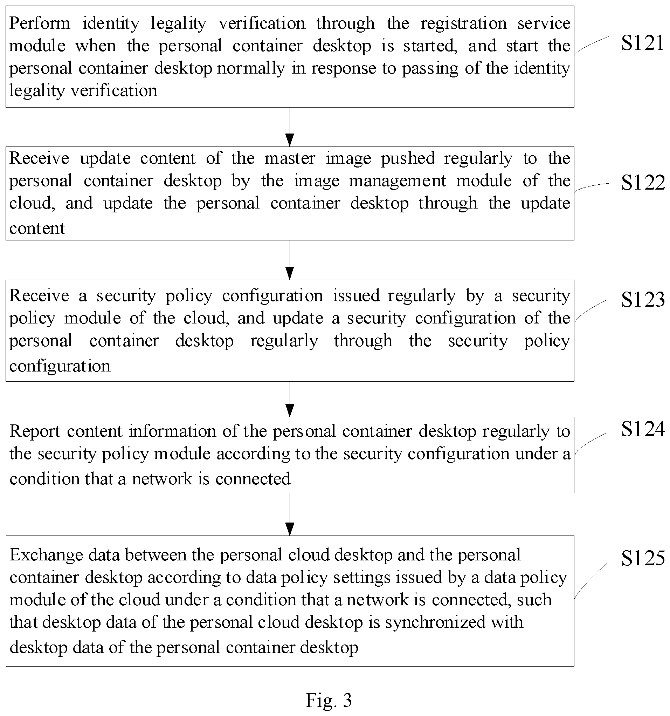

In an embodiment, after the personal container desktop is generated, the system manages the personal container desktop as follows, as shown in Fig. 3, including steps S121 to S 125.

At S121, identity legality verification is performed through the registration service module, when the personal container desktop is every time started, and the personal container desktop is started normally when passing the identity legality verification.

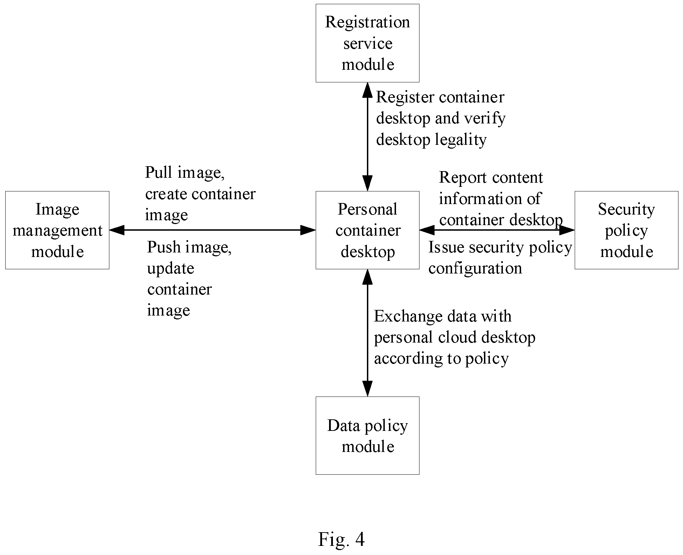

In an embodiment, as shown in Fig. 4, since a user needs to fill in a corresponding LICENSE when initiating a registration request to the registration service module of the cloud by the application container engine, identity legality verification is performed (i.e. the LICENSE is checked) by the registration service module in response to starting of the personal container desktop every time. If the identity legality verification is passed, the personal container desktop can be started normally, and if the identity legality verification is not passed, the startup is illegal, and container startup is stopped immediately.

At S 122, an update content of the master image regularly pushed to the personal container desktop by the image management module of the cloud is received, and the personal container desktop is updated through the update content.

In an embodiment, as shown in Fig. 4, in order to allow the user to get better user experience on the personal container desktop in the local client, the system may regularly push update content of the master image to the personal container desktop through the image management module of the cloud to update the personal container desktop. The update content includes a combination of at least two, from image update, desktop software update and desktop patch update, or includes at least one from image update, desktop software update and desktop patch update.

At S123, a security policy configuration regularly issued by a security policy module of the cloud is received, and a security configuration of the personal container desktop is updated regularly through the security policy configuration.

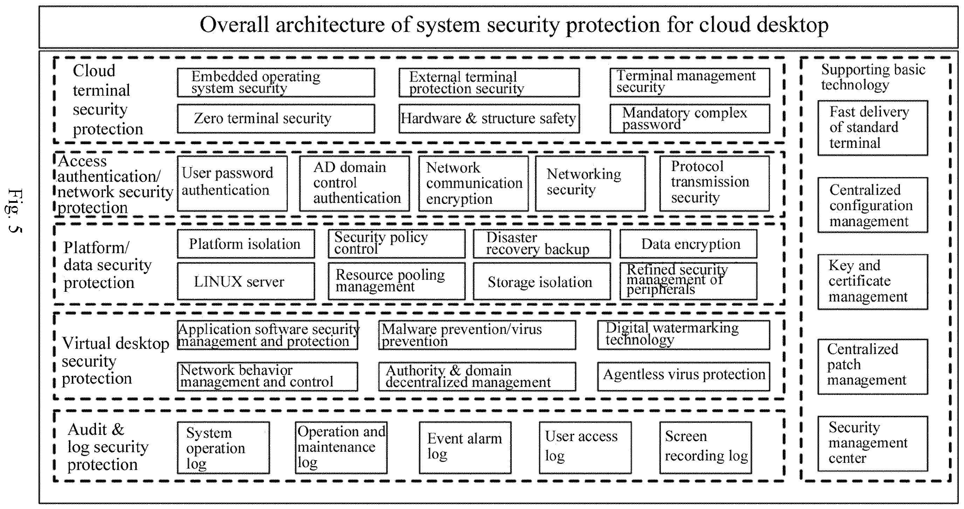

In an embodiment, as shown in Fig. 4, a security policy configuration is regularly issued by the security policy module of the cloud to update the security configuration of the personal container desktop regularly. As shown in Fig. 5, the security policy module is located at the rightmost side of this overall architecture diagram, including key and certificate management, centralized patch management, and security management center. A variety of security policy settings may be set, in some embodiments, the security policy configuration includes at least one, or a combination of at least two, from setting life cycle of personal container desktop, setting grace period for offline use, setting policy update push frequency, setting remote locking and unlocking, setting the Universal Serial Bus (USB) device access control, setting data copy restriction, setting watermark and setting patch push frequency.

At S 124, content information of the personal container desktop is regularly reported to the security policy module according to the security configuration under a condition that the network is connected.

In an embodiment, as shown in Fig. 4, under a condition that the network is connected, according to the current security configuration of the personal container desktop, the content information of the personal container desktop is regularly reported to the security policy module of the cloud.

At S125, data is exchanged between the personal cloud desktop and the personal container desktop according to data policy settings issued by the data policy module of the cloud under a condition that the network is connected, such that the desktop data of the personal cloud desktop is synchronized with the desktop data of the personal container desktop.

In an embodiment, as shown in Fig. 4, the data policy of the VDI desktop in the related technology is enabled to be portable by means of the data service module of the cloud. In some embodiments, there is a plurality of policy settings, which can be defined for data operations in the container desktop, such as 1) copy/paste; 2) file drag and drop; 3) USB device access control; and 4) firewall application whitelist. Data is exchanged between the personal cloud desktop and the personal container desktop according to data policy settings under a condition that the network is connected, such that the desktop data of the personal cloud desktop is synchronized with the desktop data of the personal container desktop.

Through the offline container desktop scheme implemented according to the present disclosure, users can use their favorite devices for business processing; the isolation of personal affairs and company business can effectively eliminate the risk of leakage of sensitive data of companies; employees' personal needs can be met (online entertainment at home); with a unified manner, administrators can update software, distribute patches, and centrally back up user data; by means of such isolation technologies, users do not have to worry about being "monitored".

### Embodiment two

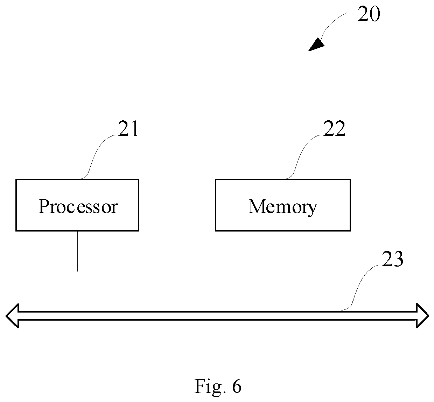

As shown in Fig. 6, embodiment two of the present disclosure proposes a device 20 for offline management of a cloud desktop. The device 20 includes a memory 21, a processor 22, a program stored in the memory 21 and executable by the processor 22, and a data bus 23 configured for connection and communication between the processor 21 and the memory 22. The program, when executed by the processor, causes the processor to implement the following steps shown in Fig. 1.

At S110, a request is initiated to an image management module of the cloud to pull a desired master image (or may be referred to as 'mirror' or 'mirror image'), and an application is made to the cloud to generate a personal cloud desktop based on the master image in the cloud.

In an embodiment, the underlying virtualization architecture of the cloud desktop implemented according to the present disclosure supports open source virtualization technology (XEN, an X86 architecture based, fastest-growing, most stable, and least resource-consuming open source virtualization technology) and kernel-level virtualization technology (Kernel-based Virtual Machine, KVM, an open source system virtualization module). The application layer of the underlying virtualization architecture contains a traditional VDI proprietary desktop. After implementing VDI, a common, supporting desktop environment can be rapidly deployed over the network. Since a server can support many virtual desktops, by using Remote Desktop Services (RDS), a user accessing to a virtual desktop does not affect other virtual desktops or the host, the server has full access to all of the functions of such virtual machine (VM). A user can also access to his virtual desktop (i.e. a personal cloud desktop) using a remote desktop client, by initiating a request to the image management module of the cloud, for pulling a desired master image, and a request to the cloud, for generating a personal cloud desktop in the cloud based on the master image. Generally, a cloud service provider provides the user with multiple versions of system images as the master image of the personal cloud desktop, such that the user can apply for his personal cloud desktop to the corresponding cloud service provider according to actual requirements.

At S 120, a registration request is initiated through an application container engine to a registration service module of the cloud, to generate a personal container desktop based on the master image in a local client.

In an embodiment, the application container engine include an open source application container engine, such as DOCKER. DOCKER allows a developer to package his application(s) and dependent package(s) into a portable container which is then released to a machine running a LINUX operating system, or to a virtual machine. Such portable containers are each fully sandboxed and does not have any interfaces with each other. A lightweight, portable, self-contained container can be created for a variety of applications. DOCKER includes Image, Container, and Repository. A container is a running instance created from an image, which can be started, launched, stopped, and deleted. Containers are secure platforms isolated from each other. A container can be considered to be a simple version of a LINUX operating system environment (including root user permission, process space, user space, web space, and graphical pages) and application(s) running in the operating system environment. A container is encapsulated in form of a virtual machine, and a container desktop is then deployed on a client, such as a laptop. A container desktop supports a host operation system of WINDOWS/LINUX. In case of network disconnection, a user can still launch a container desktop on a terminal (such as a laptop, etc.) and login with an offline mode.

Therefore, a personal container desktop based on the master image in a local client is generated by initiating a registration request to the registration service module of the cloud by the application container engine. Security attributes can be enhanced by the registration service module, such that a container image cannot be copied, but can only be pulled in advance through a serving end under a condition that the network is connected. If copy is performed, an encryption key will be changed after copying, such that the container image cannot be started normally, thus ensuring the security of offline desktop products. When the network is connected, messages are regularly exchanged with the registration service module, including requesting registration from the registration service module, checking the legality of the container desktop, etc.

As shown in Fig. 2, an image of an offline desktop (i.e. a personal container desktop) and an image of a VDI desktop (i.e. a personal cloud desktop) are both derived from the master image, and the two correspond to each other, representing characteristics as follows: 1) multiple VMs share the same system master disk, are upgraded patched in a unified manner; 2) the write operation of each VM to the system disk is saved in a differential image, and a template is created in advance through the differential image; 3) the combination of the master disk and the differential disk is mapped to a linked clone disk as the entire system disk of the VM; 4) a Solid State Disk (SSD) is used as the master disk of the system to break through a bottleneck of Input/Output Per Second (IOPS); and 5) as long as the storage capacity of the SSD is sufficient, there is no limitation to the number of templates. At this time, users may choose to start different desktops at the local client according to the actual situations encountered, or start different desktops at the local client according to the network situation. The personal cloud desktop is started when the network is unobstructed, while the personal container desktop is started when the network is obstructed, such that users can use their own cloud desktops when they cannot access the Internet or a network delay is serious, thereby improving user experience. The image of the offline desktop and the image of the VDI desktop are both derived from the master image.

In an embodiment, after the personal container desktop is generated, the system manages the personal container desktop as follows, as shown in Fig. 3, including steps S121 to S 125.

At S121, identity legality verification is performed through the registration service module, when the personal container desktop is started, and the personal container desktop is started normally in response to passing of the identity legality verification.

In an embodiment, as shown in Fig. 4, since a user needs to fill in a corresponding LICENSE when initiating a registration request to the registration service module of the cloud by the application container engine, identity legality verification is performed (i.e. the LICENSE is checked) by the registration service module in response to starting of the personal container desktop every time. If the identity legality verification is passed, the personal container desktop can be started normally, and if the identity legality verification is not passed, the startup is illegal, and container startup is stopped immediately.

At S 122, an update content of the master image regularly pushed to the personal container desktop by the image management module of the cloud is received, and the personal container desktop is updated through the update content.

In an embodiment, as shown in Fig. 4, in order to allow the user to get the best user experience on the personal container desktop in the local client, the system may regularly push update content of the master image to the personal container desktop through the image management module of the cloud to update the personal container desktop. The update content includes at least one, or a combination of at least two, from image update, desktop software update and desktop patch update.

At S123, a security policy configuration regularly issued by a security policy module of the cloud is received, and a security configuration of the personal container desktop is updated regularly through the security policy configuration.

In an embodiment, as shown in Fig. 4, a security policy configuration is regularly issued by the security policy module of the cloud to update the security configuration of the personal container desktop regularly. As shown in Fig. 5, the security policy module is located at the rightmost side of this overall architecture diagram, including key and certificate management, centralized patch management, and security management center. A variety of security policy settings may be set, in some embodiments, the security policy configuration includes at least one, or a combination of at least two, from setting life cycle of personal container desktop, setting grace period for offline use, setting policy update push frequency, setting remote locking and unlocking, setting the Universal Serial Bus (USB) device access control, setting data copy restriction, setting watermark and setting patch push frequency.

At S 124, content information of the personal container desktop is regularly reported to the security policy module according to the security configuration under a condition that the network is connected.

In an embodiment, as shown in Fig. 4, under a condition that the network is connected, according to the current security configuration of the personal container desktop, the content information of the personal container desktop is regularly reported to the security policy module of the cloud.

At S125, data is exchanged between the personal cloud desktop and the personal container desktop according to data policy settings issued by the data policy module of the cloud under a condition that the network is connected, such that the desktop data of the personal cloud desktop is synchronized with the desktop data of the personal container desktop.

In an embodiment, as shown in Fig. 4, the data policy of the VDI desktop in the related technology is enabled to be portable by means of the data service module of the cloud. In some embodiments, there is a plurality of policy settings, which can be defined for data operations in the container desktop, such as 1) copy/paste; 2) file drag and drop; 3) USB device access control; and 4) firewall application whitelist. Data is exchanged between the personal cloud desktop and the personal container desktop according to data policy settings under a condition that the network is connected, such that the desktop data of the personal cloud desktop is synchronized with the desktop data of the personal container desktop.

Through the offline container desktop scheme implemented according to the present disclosure, users can use their favorite devices for business processing; the isolation of personal affairs and company business can effectively eliminate the risk of leakage of sensitive data of companies; employees' personal needs can be met (online entertainment at home); with a unified manner, administrators can update software, distribute patches, and centrally back up user data; by means of such isolation technologies, users do not have to worry about being "monitored".

### Embodiment three

Embodiment three of the present disclosure proposes a computer-readable storage medium. One or more programs are stored in the computer-readable storage medium and are executable by one or more processors to implement the following steps shown in Fig. 1.

At S110, a request is initiated to an image management module of the cloud to pull a desired master image, and an application is made to the cloud to generate a personal cloud desktop based on the master image in the cloud.

In an embodiment, the underlying virtualization architecture of the cloud desktop implemented according to the present disclosure supports open source virtualization technology (XEN, an X86 architecture based, fastest-growing, most stable, and least resource-consuming open source virtualization technology) and kernel-level virtualization technology (Kernel-based Virtual Machine, KVM, an open source system virtualization module). The application layer of the underlying virtualization architecture contains a traditional VDI proprietary desktop. After implementing VDI, a common, supporting desktop environment can be rapidly deployed over the network. Since a server can support many virtual desktops, by using Remote Desktop Services (RDS), a user accessing to a virtual desktop does not affect other virtual desktops or the host, the server has full access to all of the functions of such virtual machine (VM). A user can also access to his virtual desktop (i.e. a personal cloud desktop) using a remote desktop client, by initiating a request to the image management module of the cloud, for pulling a desired master image, and a request to the cloud, for generating a personal cloud desktop in the cloud based on the master image. Generally, a cloud service provider provides the user with multiple versions of system images as the master image of the personal cloud desktop, such that the user can apply for his personal cloud desktop to the corresponding cloud service provider according to actual requirements.

At S120, a registration request is initiated through an application container engine to a registration service module of the cloud, to generate a personal container desktop based on the master image in a local client.

In an embodiment, the application container engine include an open source application container engine, such as DOCKER. DOCKER allows a developer to package his application(s) and dependent package(s) into a portable container which is then released to a machine running a LINUX operating system, or to a virtual machine. Such portable containers are each fully sandboxed and does not have any interfaces with each other. A lightweight, portable, self-contained container can be created for a variety of applications. DOCKER includes Image, Container, and Repository. A container is a running instance created from an image, which can be started, launched, stopped, and deleted. Containers are secure platforms isolated from each other. A container can be considered to be a simple version of a LINUX operating system environment (including root user permission, process space, user space, web space, and graphical pages) and application(s) running in the operating system environment. A container is encapsulated in form of a virtual machine, and a container desktop is then deployed on a client, such as a laptop. A container desktop supports a host operation system of WINDOWS/LINUX. In case of network disconnection, a user can still launch a container desktop on a terminal (such as a laptop, etc.) and login with an offline mode.

Therefore, a personal container desktop based on the master image in a local client is generated by initiating a registration request to the registration service module of the cloud by the application container engine. Security attributes can be enhanced by the registration service module, such that a container image cannot be copied, but can only be pulled in advance through a serving end under a condition that the network is connected. If copy is performed, an encryption key will be changed after copying, such that the container image cannot be started normally, thus ensuring the security of offline desktop products. When the network is connected, messages are regularly exchanged with the registration service module, including requesting registration from the registration service module, checking the legality of the container desktop, etc.

As shown in Fig. 2, an image of an offline desktop (i.e. a personal container desktop) and an image of a VDI desktop (i.e. a personal cloud desktop) are both derived from the master image, and the two correspond to each other, representing characteristics as follows: 1) multiple VMs share the same system master disk, are upgraded patched in a unified manner; 2) the write operation of each VM to the system disk is saved in a differential image, and a template is created in advance through the differential image; 3) the combination of the master disk and the differential disk is mapped to a linked clone disk as the entire system disk of the VM; 4) a Solid State Disk (SSD) is used as the master disk of the system to break through a bottleneck of Input/Output Per Second (IOPS); and 5) as long as the storage capacity of the SSD is sufficient, there is no limitation to the number of templates. At this time, users may choose to start different desktops at the local client according to the actual situations encountered, or start different desktops at the local client according to the network situation. The personal cloud desktop is started when the network is unobstructed, while the personal container desktop is started when the network is obstructed, such that users can use their own cloud desktops when they cannot access the Internet or a network delay is serious, thereby improving user experience. The image of the offline desktop and the image of the VDI desktop are both derived from the master image.

In an embodiment, after the personal container desktop is generated, the system manages the personal container desktop as follows, as shown in Fig. 3, including steps S121 to S 125.

At S121, identity legality verification is performed through the registration service module, when the personal container desktop is started, and the personal container desktop is started normally in response to passing of the identity legality verification.

In an embodiment, as shown in Fig. 4, since a user needs to fill in a corresponding LICENSE when initiating a registration request to the registration service module of the cloud by the application container engine, identity legality verification is performed (i.e. the LICENSE is checked) by the registration service module in response to starting of the personal container desktop every time. If the identity legality verification is passed, the personal container desktop can be started normally, and if the identity legality verification is not passed, the startup is illegal, and container startup is stopped immediately.

At S 122, an update content of the master image regularly pushed to the personal container desktop by the image management module of the cloud is received, and the personal container desktop is updated through the update content.

In an embodiment, as shown in Fig. 4, in order to allow the user to get the best user experience on the personal container desktop in the local client, the system may regularly push update content of the master image to the personal container desktop through the image management module of the cloud to update the personal container desktop. The update content includes at least one, or a combination of at least two, from image update, desktop software update and desktop patch update.

At S123, a security policy configuration regularly issued by a security policy module of the cloud is received, and a security configuration of the personal container desktop is updated regularly through the security policy configuration.

In an embodiment, as shown in Fig. 4, a security policy configuration is regularly issued by the security policy module of the cloud to update the security configuration of the personal container desktop regularly. As shown in Fig. 5, the security policy module is located at the rightmost side of this overall architecture diagram, including key and certificate management, centralized patch management, and security management center. A variety of security policy settings may be set, in some embodiments, the security policy configuration includes at least one, or a combination of at least two, from setting life cycle of personal container desktop, setting grace period for offline use, setting policy update push frequency, setting remote locking and unlocking, setting the Universal Serial Bus (USB) device access control, setting data copy restriction, setting watermark and setting patch push frequency.

At S 124, content information of the personal container desktop is regularly reported to the security policy module according to the security configuration under a condition that the network is connected.

In an embodiment, as shown in Fig. 4, under a condition that the network is connected, according to the current security configuration of the personal container desktop, the content information of the personal container desktop is regularly reported to the security policy module of the cloud.

At S125, data is exchanged between the personal cloud desktop and the personal container desktop according to data policy settings issued by the data policy module of the cloud under a condition that the network is connected, such that the desktop data of the personal cloud desktop is synchronized with the desktop data of the personal container desktop.

In an embodiment, as shown in Fig. 4, the data policy of the VDI desktop in the related technology is enabled to be portable by means of the data service module of the cloud. In some embodiments, there is a plurality of policy settings, which can be defined for data operations in the container desktop, such as 1) copy/paste; 2) file drag and drop; 3) USB device access control; and 4) firewall application whitelist. Data is exchanged between the personal cloud desktop and the personal container desktop according to data policy settings under a condition that the network is connected, such that the desktop data of the personal cloud desktop is synchronized with the desktop data of the personal container desktop.

Through the offline container desktop scheme implemented according to the present disclosure, users can use their favorite devices for business processing; the isolation of personal affairs and company business can effectively eliminate the risk of leakage of sensitive data of companies; employees' personal needs can be met (online entertainment at home); with a unified manner, administrators can update software, distribute patches, and centrally back up user data; by means of such isolation technologies, users do not have to worry about being "monitored".

According to the method and device for offline management of a cloud desktop, and storage medium proposed by embodiments of the present disclosure, a request is initiated to an image management module of the cloud to pull a desired master image, and an application is made to the cloud to generate a personal cloud desktop based on the master image in the cloud. Meanwhile, a registration request is initiated to a registration service module of the cloud by an application container engine to generate a personal container desktop based on the master image in a local client. Therefore, users can choose to start different desktops at the local client according to the actual situation encountered, or start different desktops at the local client according to the network situation. Typically, the personal cloud desktop is started when the network is unobstructed, while the personal container desktop is started when the network is obstructed, such that users can use their own cloud desktops when they cannot access the Internet or a network delay is serious, thereby improving the user experience.

Those having ordinary skills in the art shall understand that all or some of the steps in a method, and all or some of the functional modules/units in a system or an apparatus disclosed above may be implemented as software, firmware, hardware, and appropriate combinations thereof.

In a hardware implementation, partitioning between functional modules/units mentioned in the above description does not necessarily correspond to partitioning of physical components. For example, a physical component may have multiple functions, while a function or step may be performed by several physical components in cooperation. Some or all of physical component may be implemented as software execute by a processor, such as a central processor, digital signal processor or microprocessor, or as hardware, or as an integrated circuit, such as an application-specific integrated circuit. Such software may be distributed over computer-readable medium, which may include computer storage medium (or non-transitory medium) and communication medium (or transitory medium). As known to those having ordinary skills in the art, the term computer storage medium includes volatile and non-volatile, removable and non-removable medium implemented in any method or technique configured to store information, such as computer-readable instruction, data structure, program module or other data. Computer storage medium include, but is not limited to, Random Access Memory (RAM), Read-Only Memory (ROM), Electrically Erasable Programmable Read Only Memory (EEPROM), flash memory or other memory technologies, Compact Disc Read-Only Memory (CD-ROM), Digital Versatile Disk (DVD) or other optical disk storage, magnetic cassette, magnetic tape, magnetic disk storage or other magnetic storage devices, or any other medium that may be configured to store desired information and that may be accessed by a computer. Furthermore, as is well known to those having ordinary skills in the art, communication medium typically contain computer-readable instruction(s), data structure(s), program module(s), or other data in a modulated data signal such as carrier wave or other transmission mechanism, and may include any information delivery medium.

## Claims

1. A method for offline management of a cloud desktop, comprising:
pulling a desired master image by initiating a request to an image management module of a cloud, and sending a request to the cloud to generate a personal cloud desktop based on the master image in the cloud (S110); and
initiating a registration request through an application container engine to a registration service module of the cloud, to generate a personal container desktop in a local client based on the master image (S120).

2. The method of claim 1, wherein the initiating a registration request through an application container engine to a registration service module of the cloud to generate a personal container desktop in a local client based on the master image (S120) comprises:
performing identity legality verification through the registration service module when the personal container desktop is started, and starting the personal container desktop normally in response to passing of the identity legality verification (S121).

3. The method of claim 1, wherein the initiating a registration request through an application container engine to a registration service module of the cloud to generate a personal container desktop in a local client based on the master image (S120) comprises:
receiving update content of the master image pushed regularly to the personal container desktop by the image management module of the cloud, and updating the personal container desktop through the update content (S122).

4. The method of claim 3, wherein the update content comprises a combination of at least two from image update, desktop software update and desktop patch update.

5. The method of claim 1, wherein the initiating a registration request through an application container engine to a registration service module of the cloud to generate a personal container desktop in a local client based on the master image (S120) comprises:
receiving a security policy configuration issued regularly by a security policy module of the cloud, and updating a security configuration of the personal container desktop regularly through the security policy configuration (S123).

6. The method of claim 5, wherein the security policy configuration comprises a combination of at least two from setting life cycle of personal container desktop, setting grace period for offline use, setting policy update push frequency, setting remote locking and unlocking, setting Universal Serial Bus, USB device access control, setting data copy restriction, setting watermark and setting patch push frequency.

7. The method of claim 5, wherein the initiating a registration request through an application container engine to a registration service module of the cloud to generate a personal container desktop in a local client based on the master image (S120) comprises:
reporting content information of the personal container desktop regularly to the security policy module according to the security configuration under a condition that a network is connected (S124).

8. The method of claim 1, wherein the initiating a registration request through an application container engine to a registration service module of the cloud to generate a personal container desktop in a local client based on the master image (S120) comprises:
exchanging data between the personal cloud desktop and the personal container desktop according to data policy settings issued by a data policy module of the cloud under a condition that a network is connected, such that desktop data of the personal cloud desktop is synchronized with desktop data of the personal container desktop (S125).

9. A device for offline management of a cloud desktop, comprising: a memory (22), a processor (21), a program stored in the memory (22) and executable by the processor (21), and a data bus (20) for connection and communication between the processor (21) and the memory (22), wherein the program, when executed by the processor (21), causes the processor (21) to perform the method of any one of claims 1 to 8.

10. A storage medium configured as a computer-readable storage medium, wherein one or more programs are stored in the storage medium and executable by one or more processors to perform the method of any one of claims 1 to 8.

## Patentansprüche

1. Verfahren zur Offline-Verwaltung eines Cloud-Desktops, umfassend:
Heranziehen eines gewünschten Masterbilds durch Initiieren einer Anfrage an ein Bild-Verwaltungsmodul einer Cloud, und Senden einer Anfrage an die Cloud, um einen persönlichen Cloud-Desktop basierend auf dem Masterbild in der Cloud (S 110) zu generieren; und
Initiieren einer Registrierungsanfrage über eine Anwendungs-Container-Engine an ein Registrierung-Servicemodul der Cloud, um einen persönlichen Container-Desktop in einem lokalen Client basierend auf dem Masterbild (S120) zu generieren.

2. Verfahren nach Anspruch 1, wobei das Initiieren einer Registrierungsanfrage über eine Anwendungs-Container-Engine an ein Registrierungs-Servicemodul der Cloud, um einen persönlichen Container-Desktop in einem lokalen Client basierend auf einem Masterbild zu generieren (S120), umfasst:
Durchführen einer Identitäts-Legalitätsüberprüfung durch das Registrierungs-Servicemodul, wenn der persönliche Container-Desktop gestartet wird, und normales Starten des persönlichen Container-Desktops als Antwort auf Bestehen der Identitäts-Legalitätsprüfung (S121).

3. Verfahren nach Anspruch 1, wobei das Initiieren einer Registrierungsanfrage über eine Anwendungs-Container-Engine an ein Registrierungs-Servicemodul der Cloud, um einen persönlichen Container-Desktop in einem lokalen Client basierend auf einem Masterbild zu generieren (S120), umfasst:
Empfangen von Aktualisierungsinhalt des Masterbilds, der regelmäßig durch das Bild-Verwaltungsmodul der Cloud an den persönlichen Container-Desktop gepusht wird, und Aktualisieren des persönlichen Container-Desktops über den Aktualisierungsinhalt (S122).

4. Verfahren nach Anspruch 3, wobei der Aktualisierungsinhalt eine Kombination von mindestens zwei aus Bild-Aktualisierung, Desktop-Softwareaktualisierung und Desktop-Patchaktualisierung umfasst.

5. Verfahren nach Anspruch 1, wobei das Initiieren einer Registrierungsanfrage über eine Anwendungs-Container-Engine an ein Registrierungs-Servicemodul der Cloud, um einen persönlichen Container-Desktop in einem lokalen Client basierend auf einem Masterbild zu generieren (S 120), umfasst:
Empfangen einer Sicherheitsrichtlinien-Konfiguration, die regelmäßig von einem Sicherheitsrichtlinien-Modul der Cloud ausgestellt wird, und regelmäßiges Aktualisieren einer Sicherheits-Konfiguration des persönlichen Container-Desktops über die Sicherheitsrichtlinien-Konfiguration (S123).

6. Verfahren nach Anspruch 5, wobei die Sicherheitsrichtlinien-Konfiguration eine Kombination von mindestens zwei aus Einstellen eines Lebenszyklus des persönlichen Container-Desktops, Einstellen einer Karenzzeit für die Offline-Nutzung, Einstellen einer Richtlinienaktualisierungs-Push-Häufigkeit, Einstellen einer Fernsperrung und Fernentsperrung, Einstellen einer Zugriffskontrolle für Universal Serial Bus, USB-Geräte, Einstellen einer Daten-Kopier-Einschränkung, Einstellen eines Wasserzeichens und Einstellen einer Patch-Push-Häufigkeit umfasst.

7. Verfahren nach Anspruch 5, wobei das Initiieren einer Registrierungsanfrage über eine Anwendungs-Container-Engine an ein Registrierungs-Servicemodul der Cloud, um einen persönlichen Container-Desktop in einem lokalen Client basierend auf einem Masterbild zu generieren (S 120), umfasst:
regelmäßiges Berichten von Inhaltsinformationen des persönlichen Container-Desktops an das Sicherheitsrichtlinien-Modul gemäß der Sicherheits-Konfiguration unter der Bedingung, dass ein Netzwerk verbunden ist (S124).

8. Verfahren nach Anspruch 1, wobei das Initiieren einer Registrierungsanfrage über eine Anwendungs-Container-Engine an ein Registrierungs-Servicemodul der Cloud, um einen persönlichen Container-Desktop in einem lokalen Client basierend auf einem Masterbild zu generieren (S 120), umfasst:
Austauschen von Daten zwischen dem persönlichem Cloud-Desktop und dem persönlichem Container-Desktop gemäß Datenrichtlinien-Einstellungen, die von einem Datenrichtlinien-Modul der Cloud ausgestellt werden, unter einer Bedingung, dass ein Netzwerk verbunden ist, sodass Desktop-Daten des persönlichen Cloud-Desktops synchronisiert mit Desktop Daten des persönlichen Container-Desktops sind (S125).

9. Gerät zur Offline-Verwaltung eines Cloud-Desktops, umfassend: einen Speicher (22), einen Prozessor (21), ein Programm, gespeichert auf dem Speicher (22) und ausführbar durch den Prozessor (21), und einen Datenbus (20) zur Verbindung und Kommunikation zwischen dem Prozessor (21) und dem Speicher (22), wobei das Programm, wenn es durch den Prozessor (21) ausgeführt wird, den Prozessor (21) dazu veranlasst, das Verfahren nach einem der Ansprüche 1 bis 8 durchzuführen.

10. Speichermedium, konfiguriert als ein computerlesbares Speichermedium, wobei eines oder mehrere Programme auf dem Speichermedium gespeichert sind und ausführbar durch einen oder mehrere Prozessoren sind, um das Verfahren nach einem der Ansprüche 1-8 durchzuführen.

## Revendications

1. Un procédé de gestion hors ligne d'un bureau cloud, comprenant :
le fait d'extraire une image principale souhaitée en lançant une requête à un module de gestion d'images d'un cloud, et d'envoyer une requête au cloud pour générer un bureau cloud personnel sur la base de l'image principale dans le cloud (S110) ; et
le fait de lancer une demande d'enregistrement via un moteur conteneur d'applications vers un module de service d'enregistrement du cloud, pour générer un bureau de travail (en anglais *"container desktop"*) personnel dans un client local sur la base de l'image principale (S 120).

2. Le procédé selon la revendication 1, dans lequel le lancement d'une demande d'enregistrement via un moteur conteneur d'applications vers un module de service d'enregistrement du cloud pour générer un bureau de travail personnel dans un client local sur la base de l'image principale (S 120) comprend :
le fait d'effectuer une vérification de légalité d'identité par l'intermédiaire du module de service d'enregistrement lorsque le bureau de travail personnel est démarré, et de démarrer le bureau de travail personnel normalement en réponse à la réussite de la vérification de légalité d'identité (S 121).

3. Le procédé selon la revendication 1, dans lequel le lancement d'une demande d'enregistrement via un moteur conteneur d'applications vers un module de service d'enregistrement du cloud pour générer un bureau de travail personnel dans un client local sur la base de l'image principale (S 120) comprend :
le fait de recevoir le contenu de mise à jour de l'image principale transmis régulièrement vers le bureau de travail personnel par le module de gestion d'images du cloud, et de mettre à jour le bureau de travail personnel via le contenu de mise à jour (S 122).

4. Le procédé selon la revendication 3, dans lequel le contenu de mise à jour comprend une combinaison d'au moins deux éléments parmi une mise à jour d'image, une mise à jour de logiciel de bureau et une mise à jour de correctif de bureau.

5. Le procédé selon la revendication 1, dans lequel le lancement d'une demande d'enregistrement via un moteur conteneur d'applications vers un module de service d'enregistrement du cloud pour générer un bureau de travail personnel dans un client local sur la base de l'image principale (S 120) comprend :
le fait de recevoir une configuration de politique de sécurité émise régulièrement par un module de politique de sécurité du cloud, et de mettre à jour régulièrement une configuration de sécurité du bureau de travail personnel par l'intermédiaire de la configuration de politique de sécurité (S 123).

6. Le procédé selon la revendication 5, dans lequel la configuration de la politique de sécurité comprend une combinaison d'au moins deux parmi le fait de définir le cycle de vie du bureau de travail personnel, de définir la période de grâce pour une utilisation hors ligne, de définir la fréquence de transmission de mise à jour de la politique, de définir le verrouillage et le déverrouillage à distance, de définir une commande d'accès à un périphérique USB, Universal Serial Bus, de définir des restrictions de copie de données, de définir un filigrane et de définir de la fréquence de transmission des patchs.

7. Le procédé selon la revendication 5, dans lequel le lancement d'une demande d'enregistrement via un moteur conteneur d'applications vers un module de service d'enregistrement du cloud pour générer un bureau de travail personnel dans un client local sur la base de l'image principale (S 120) comprend :
le fait de faire régulièrement un compte rendu des informations de contenu du bureau de travail personnel au module de politique de sécurité en fonction de la configuration de sécurité à condition qu'un réseau soit connecté (S 124).

8. Le procédé selon la revendication 1, dans lequel le lancement d'une demande d'enregistrement via un moteur conteneur d'applications vers un module de service d'enregistrement du cloud pour générer un bureau de travail personnel dans un client local sur la base de l'image principale (S 120) comprend :
le fait d'échanger des données entre le bureau cloud personnel et le bureau de travail personnel selon des paramètres de politique de données émis par un module de politique de données du cloud à condition qu'un réseau soit connecté, de telle sorte que les données de bureau du bureau cloud personnel soient synchronisées avec des données de bureau du bureau de travail personnel (S 125).

9. Un dispositif de gestion hors ligne d'un bureau cloud, comprenant : une mémoire (22), un processeur (21), un programme stocké dans la mémoire (22) et exécutable par le processeur (21), et un bus de données (20) pour la connexion et la communication entre le processeur (21) et la mémoire (22), le programme, lorsqu'il est exécuté par le processeur (21), amenant le processeur (21) à mettre en oeuvre le procédé selon l'une quelconque des revendications 1 à 8.

10. Un support de stockage configuré comme support de stockage lisible par ordinateur, dans lequel un ou plusieurs programmes sont stockés dans le support de stockage et exécutables par un ou plusieurs processeurs pour mettre en oeuvre le procédé de l'une quelconque des revendications 1 à 8.
